# EUROPÄISCHE PATENTSCHRIFT

(11) **EP 2 530 330 B1**
(45) Veröffentlichungstag und Bekanntmachung des Hinweises auf die Patenterteilung: **25.05.2016**
(21) Anmeldenummer: 11168407.2
(22) Anmeldetag: 01.06.2011
(51) Int. Cl.: F04D 29/32, F04D 29/68, F04D 29/52

(54) **Laufschaufel für einen Verdichter einer Turbomaschine, Verdichter sowie Turbomaschine**
Rotor blade for the compressor of a turbo engine, compressor and turbo machine
Aube directrice pour un compresseur d'une turbomachine, compresseur et turbomachine

(43) Veröffentlichungstag der Anmeldung: 05.12.2012
(73) Patentinhaber: MTU Aero Engines AG, 80995 München (DE)
(72) Erfinder: Dr. Schönenborn, Harald, 85757 Karlsfeld (DE)

(56) Entgegenhaltungen:
- EP-A2- 1 126 133
- EP-A2- 1 382 799
- EP-A2- 1 529 962
- DE-A1- 2 942 703
- GB-A- 2 452 104
- US-A- 4 875 831

## Beschreibung

Die Erfindung betrifft eine Laufschaufel für einen Verdichter einer Turbomaschine nach dem Oberbegriff des Patentanspruchs 1, einen Verdichter mit derartigen Laufschaufeln sowie eine Turbomaschine mit einem derartigen Verdichter.

Bei Verdichtern in Turbomaschinen kann regelmäßig beim Betreiben der Verdichter außerhalb eines Auslegungspunktes der Laufschaufeln ein sogenanntes Verdichterpumpen einsetzen, bei dem sich der Druck im Verdichter infolge einer Strömungsablösung an den Laufschaufeln von hinten nach vorne abbaut und somit eine Rückströmung gebildet wird. Ein derartiges Verdichterpumpen reduziert die Verdichterstabilität und wirkt sich nachteilig auf den Wirkungsgrad der Turbomaschine aus. Zudem treten in der Beschaufelung hohe Belastungen auf, die zum Teil auf ein Schwingen bzw. Flattern während der Rückströmphase zurückzuführen sind. Eine bekannte Maßnahme zur Reduzierung der Belastung ist gezieltes Mistuning. Dieses ist jedoch technisch sehr aufwendig. Eine alternative Maßnahme ist die Beeinflussung der stationären und instationären Strömung im Bereich der Hinterkante in Gehäusenähe, da dieser Bereich maßgeblich für die Belastung ist. So ist es bspw. aus der DE 10 2008 037 154 A1 bekannt, in einer den Laufschaufeln gegenüberliegenden Ringraumwandung eine Vielzahl von parallelogrammartigen Nuten oder Umfangsnuten vorzusehen, die derart in der Ringraumwandung positioniert sind, dass sie im Vorderkantenbereich der Laufschaufeln angeordnet sind. Aus der DE 2 942 703 A1 ist es bekannt, in einer den Laufschaufeln gegenüberliegenden Ringraumwandung eine Umfangsnut einzubringen.

Neben diesen statorseitigen Modifikationen sind ebenfalls schaufelseitige Modifikationen zur Belastungsreduzierung der Schaufeln bekannt. So wird z.B. in der DE 103 52 253 A1 zur Verbesserung eines Schwingverhaltens von Laufschaufeln vorgeschlagen, diese blattspitzenseitig mit einer in die Hinterkante mündenden Stufe zu versehen. In der US 2010/0008785 A1 wird zur Verbesserung des Schwingverhaltens vorgeschlagen, zwischen der Vorderkante und der Hinterkante der Laufschaufeln jeweils eine zur Blattspitze geöffnete druckseitige Tasche auszubilden.

Weiterer Stand der Technik ist aus der US 4,875,831 A und aus der GB 2 452 104 A bekannt. Die GB 2 452 104 A zeigt eine Laufschaufel für einen Verdichter, auf deren Blattspitze eine zweigeteilte und insbesondere asymmetrische Dichtlippe mit einem vorderen saugseitigen Dichtlippenteil und einem hinteren druckseitigen Dichtlippenteil angeordnet ist. Die GB 2 452 104 A zeigt einen Fan, dessen Laufschaufeln jeweils eine Blattspitze haben, die mit einem hinteren abgewinkelten Plateau versehen ist. An einer einer Ringraumwandung zugewandten Außenfläche des Plateaus kann ein sich axial erstreckendes Wellenprofil ausgebildet sein.

Aufgabe der Erfindung ist es, eine Laufschaufel für einen Verdichter einer Turbomaschine zu schaffen, die die vorgenannten Nachteile beseitigt und reduzierten Belastungen ausgesetzt ist. Des Weiteren ist es Aufgabe der Erfindung, einen Verdichter mit einer hohen Verdichterstabilität sowie eine Turbomaschine mit einem hohen Wirkungsgrad zu schaffen.

Diese Aufgabe wird gelöst durch eine Laufschaufel mit den Merkmalen des Patentanspruchs 1, durch einen Verdichter mit den Merkmalen des Patentanspruchs 3 und durch eine Turbomaschine mit den Merkmalen des Patentanspruchs 4.

Eine erfindungsgemäße Laufschaufel für einen Verdichter einer Turbomaschine hat ein Schaufelblatt, das eine Vorderkante, eine Hinterkante und eine Blattspitze aufweist, zwischen denen sich eine Druckseite und eine Saugseite erstreckt. Erfindungsgemäß weist das Schaufelblatt eine druckseitige Profilvariation auf, die sich in die Hinterkante und in die Blattspitze erstreckt. Die Profilvariation ist eine zur Blattspitze und zur Hinterkante geöffnete Ausnehmung bzw. Vertiefung, die in Strömungsrichtung betrachtet in einem Bereich eines maximalen Druckgradienten beginnt und eine gegenüber einem benachbarten Flächenabschnitt zurückgestufte ebene Anströmfläche aufweist. Oder die Profilvariation ist als ein Wellenprofil ausgebildet, dessen Wellentäler quasi radial zur Rotationsrichtung orientiert sind.

Die Profilvariation ist eine lokale Profilformänderung der Druckseite. Durch die Positionierung in einem von der Hinterkante und der Blattspitze begrenzten Bereich ist die Profilvariation im Staupunkt einer sich bei Verdichterpumpen einstellenden Rückströmung ausgebildet, wodurch erfindungsgemäß eine Streuung der Rückströmung beim Verdichterpumpen erzielt wird.

Die Rückströmung wird in eine Vielzahl von Teilströmen zerlegt und kann somit nicht konzentriert zur Nachbarschaufel übertragen werden. Hierdurch wird die Schaufelbelastung wesentlich reduziert, wodurch die Schaufelblätter wandstärkenreduziert ausgeführt sein können und nicht aufgedickt werden müssen. Zudem entfallt ein gezieltes und technisch aufwendiges Mistuning. Der Druckgradient definiert einen Ablösepunkt der Strömung, in dem der Druck zwischen einer schaufelblattnahen energiearmen Grenzschicht und einer schaufelblattfemen energiereichen Strömungsschicht am größten ist. Gleichzeitig bewirkt die Ausnehmung eine Energetisierung der Grenzschicht, wodurch die Strömungsablösung verzögert wird. Durch das Wellenprofil quer zur Strömungsrichtung bzw. radial zur Rotationsrichtung stellen ihre Wellentäler und Wellenberge jeweils einzelne, die Teilströme selbst zerlegende Strömungsbarrieren für die Rückströmung dar. Gleichzeitig bewirken die Wellentäler und Wellenberge eine Energetisierung der Grenzschicht, wodurch die Strömungsablösung verzögert wird.

Ein erfindungsgemäßer Verdichter hat zumindest eine Schaufelreihe mit einer Vielzahl von erfindungsgemäßen Laufschaufeln. Ein derartiger Verdichter zeichnet sich durch eine geringe Laufschaufelbelastung bspw. bei einem Verdichterpumpen bzw. beim Ausbilden einer Rückströmung aus, da diese an den Laufschaufeln wirkungsvoll in eine Vielzahl von Teilströmen zerstreut wird. Hierdurch wird zum einen die Verdichterstabilität erhöht. Zum anderen können die Laufschaufeln wandstärkenoptimiert und somit gewichtsreduziert ausgeführt werden, was sich u.a. in einem geringen Verdichtergewicht und in einer hohen Laufruhe resultiert.

Eine erfindungsgemäße Turbomaschine weist einen erfindungsgemäßen Verdichter auf. Eine derartige Turbomaschine zeichnet sich durch geringe Wirkungsgradverluste und somit durch einen hohen Wirkungsgrad aus.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1a: ein erstes Ausführungsbeispiel einer erfindungsgemäßen Laufschaufel,
- Figur 1b: eine Detaildarstellung einer druckseitigen Profilierung aus Figur 1a,
- Figur 2: ein zweites Ausführungsbeispiel der erfindungsgemäßen Laufschaufel,
- Figur 3: eine erste Radialspalterweiterung, die nicht von der Erfindung umfasst ist,
- Figur 4: eine zweite Radialspalterweiterung, die nicht von der Erfindung umfasst ist,
- Figur 5: eine erste statorseitigen Konturvariation, die nicht von der Erfindung umfasst ist, und
- Figur 6: eine zweite statorseitigen Konturvariation, die nicht von der Erfindung umfasst ist.

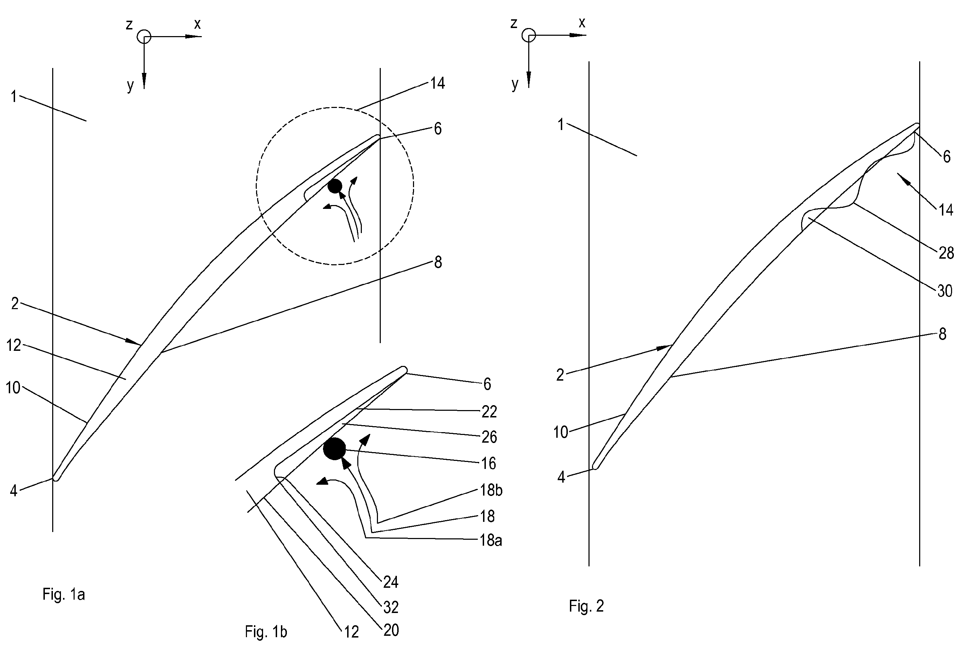

Figur 1 zeigt eine Draufsicht auf eine abgewickelte Schaufelreihe 1 eines Verdichters eines Flugzeugtriebwerks. Die Schaufelreihe 1 besteht aus einer Vielzahl von in Umfangsrichtung bzw. Rotationsrichtung y nebeneinander angeordneten Laufschaufeln, von denen aus Gründen der Übersichtlichkeit lediglich ein Schaufelblatt 2 gezeigt ist.

Das Schaufelblatt 2 hat in Strömungsrichtung x betrachtet eine Vorderkante 4 und eine Hinterkante 6, zwischen denen sich eine Druckseite 8 sowie eine Saugseite 10 erstreckt. Zudem hat das Schaufelblatt 2 eine dem Betrachter zugewandte und sich in Schaufellängsrichtung erstreckende Blattspitze 12, die eine radial äußere Begrenzung der Saugseite 8 und der Druckseite 10 darstellt.

Erfindungsgemäß ist in einem druckseitigen Flächenbereich zwischen der Hinterkante 6 und der Blattspitze 12 eine Profilvariation 14 ausgebildet. Diese ist wie in Figur 1b gezeigt, im Bereich eines Staupunktes 16 einer sich bei einer Strömungsablösung ausbildenden Rückströmung 18 angeordnet und bewirkt die Zerstreuung der Rückströmung 18 in einer Vielzahl von in unterschiedliche Richtungen orientierten Teilströmen 18a, 18b.

Die Profilvariation 14 ist in dem gezeigten Ausführungsbeispiel als eine Ausnehmung ausgebildet, die zur Hinterkante 6 und zur Blattspitze 12 geöffnet ist. Sie bildet eine lokale Querschnittsverjüngung des Schaufelblattes 2 und weist eine gegenüber einem benachbarten Flächenabschnitt 20 zurückgestufte ebene Anströmfläche 22 auf. Vorzugsweise erstreckt sie sich in Schaufelquerrichtung bis zur Mitte des Schaufelblattes 2. Sie ist in Strömungsrichtung x betrachtet von einer vorderen bogenförmigen Hochfläche 24 und von der stromabwärtigen Hinterkante 6 begrenzt. In Radialrichtung wird die Profilvariation 14 von einer sich in Schaufellängsrichtung ersteckenden radial inneren bogenförmigen Längsfläche 26 und der äußeren Blattspitze 12 begrenzt.

Bei einem in Figur 2 gezeigten Ausführungsbeispiel ist die druckseitige Profilvariation 14 als ein Wellenprofil mit einer Vielzahl von Erhebungen bzw. Wellenbergen 28 und einer Vielzahl von Vertiefungen bzw. Wellentälern 30 gebildet. Die Erhebungen 28, die sich jeweils über das Druckseitenprofil hinaus erstrecken, bewirken eine lokale Verdickung des Schaufelblattes 2. Die Vertiefungen 30 bewirken eine lokale Verjüngung des Schaufelblattes 2. Sie sind quer zur Strömungsrichtung x und somit quasi radial zur Rotationsachse orientiert und bilden somit eine Vielzahl von Strömungsbarrieren für die Rückströmung 18 bzw. für deren Teilströme 18a, 18b. Dabei wird es bevorzugt, wenn das Wellenprofil in Strömungsrichtung x betrachtet mit einer Vertiefung 30 beginnt. Dabei kann das Wellenprofil 14 eine konstante Amplitude und eine konstante Wellenlänge aufweisen. Jedoch können die Amplitude und/oder die Wellenlänge auch variieren. Beispielsweise ist es vorstellbar, im Staupunkt 16 eine große Amplitude vorzusehen und diese dann stromaufwärts und stromabwärts zu verkleinern, so dass das Wellenprofil 14 quasi gedämpft beidseits ausläuft. Die Wellenlänge kann dabei unverändert bleiben.

Beide Ausführungsbeispiele bewirken eine Zerstreuung der Rückströmung 18 in eine Vielzahl von in unterschiedliche Richtungen orientierten Teilströmen 18a, 18b, so dass eine Druckstörung, die durch die Schaufelbewegung induziert wird, nicht zur Nachbarschaufel übergeht. Gleichzeitig bewirken die druckseitigen Profilvariationen 14 eine Energetisierung einer schaufelblattnahen energiearmen Grenzschicht, wodurch eine Strömungsablösung verzögert wird. Zur optimalen Energetisierung beginnt in Strömungsrichtung x betrachtet die Profilvariation 14 im Bereich eines maximalen Druckgradienten 32 zwischen der energiearmen Grenzschicht und einer schaufelblattfernen energiereichen Strömungsschicht. Wie in Figur 1b gezeigt ist hierzu die Hochfläche 24 im Bereich des maximalen Druckgradienten 32 angeordnet.

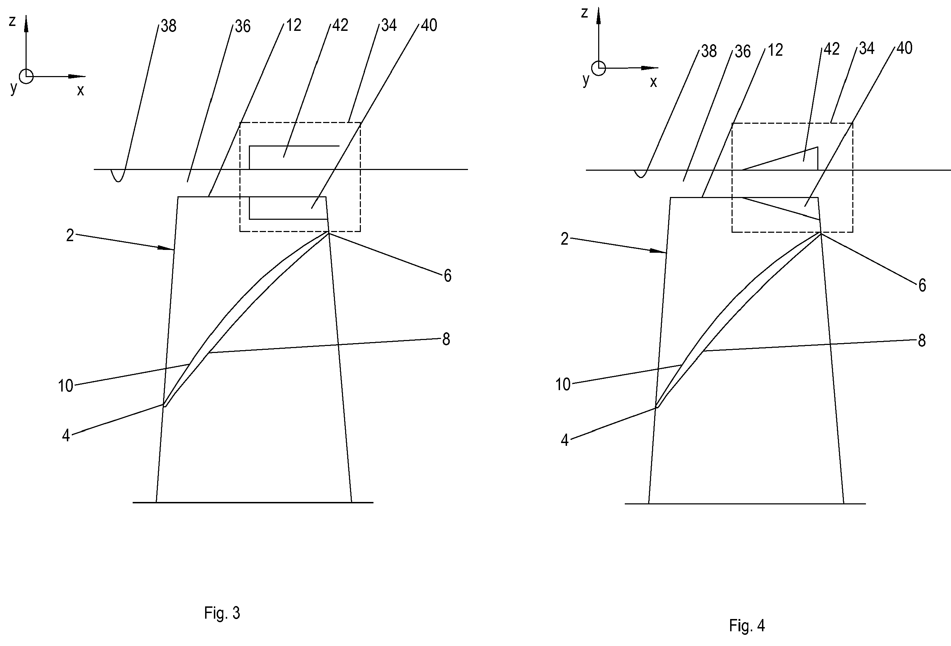

In den Figuren 3 und 4, die keinen Teil der Erfindung darstellen, sind Erweiterungen 34 eines Radialspaltes 36 zur Beeinflussung der stationären Strömung im Bereich der Laufschaufelhinterkanten 6 gezeigt, der von den Blattspitzen 12 einer Laufschaufelreihe und einer gegenüberliegenden statorseitigen Seitenwandungsabschnitt 38 begrenzt wird. Hierzu ist schaufelblattseitig etwa im Bereich der in den Figuren 1a, 1b und 2 gezeigten einseitigen Profilvariation 14 eine sich von der Druckseite 8 zur Saugseite 10 erstreckende Zurückstufung 40 ausgebildet, so dass die Blattspitzen 12 im stromabwärtigen hinteren Bereich radial abgesenkt sind. Statorseitig ist in dem Seitenwandungsabschnitt 38 eine der Anzahl der Laufschaufeln entsprechende Anzahl von Gegenkonturen 42 ausgebildet. Die Gegenkonturen 42 sind bevorzugterweise symmetrisch zu den Zurückstufungen 40 ausgebildet und bilden in Kombination mit diesen die Radialspaltenveiterungen 34. Diese sind in den gezeigten Ausführungsbeispielen bevorzugterweise rechteckig (Fig. 3) oder trichterförmig (Fig. 4) ausgeführt.

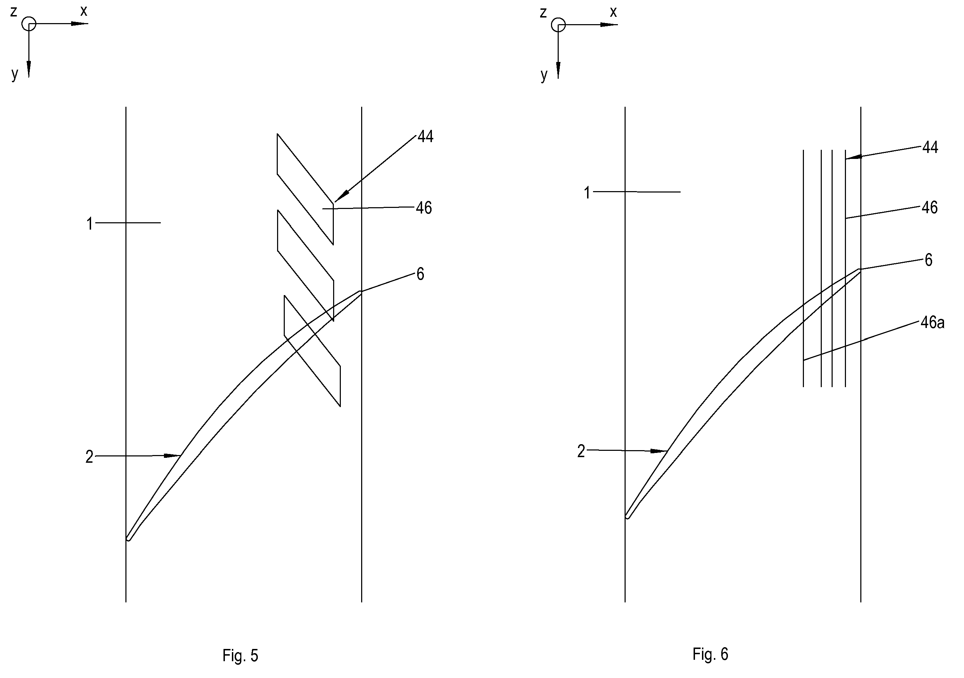

In den Figuren 5 und 6, die ebenfalls keinen Teil der Erfindung darstellen, sind statorseitige Konturvariation 44 zur Beeinflussung der stationären Strömung im Bereich der Laufschaufelhinterkanten 6 einer Schaufelreihe 1 gezeigt. Hierzu ist in einem in etwa den Hinterkanten 6 der Laufschaufeln bzw. Schaufelblätter 2 radial gegenüberliegenden Seitenwandungsabschnitt eine Vielzahl von Nuten 46 eingebracht. Diese haben bei dem in Figur 5 gezeigten Ausführungsbeispiel eine parallelogrammartige Gestalt und sind in Umfangsrichtung y gleichmäßig voneinander beabstandet. Bei dem in Figur 6 gezeigten Ausführungsbeispiel sind die Nuten 46 als parallele Umfangsnuten ausgebildet, die bevorzugterweise in Strömungsrichtung x gleichmäßig voneinander beabstandet sind. Die Nuten 46 können jedoch auch wie in Figur 6 durch die vordere Nut 46a gezeigt, in Strömungsrichtung x betrachtet unterschiedlich Axialabstande aufweisen.

Offenbart sind eine Laufschaufel für einen Verdichter einer Turbomaschine mit einem Schaufelblatt, das eine Vorderkante, eine Hinterkante, und eine Blattspitze aufweist, zwischen denen sich eine Druckseite und eine Saugseite erstreckt, wobei eine sich in die Hinterkante und die Blattspitze erstreckende druckseitige Profilvariation vorgesehen ist, ein Verdichter sowie eine Turbomaschine.

### Bezugszeichenliste

- 1: Schaufelreihe
- 2: Schaufelblatt
- 4: Vorderkante
- 6: Hinterkante
- 8: Druckseite
- 10: Saugseite
- 12: Blattspitze
- 14: Profilvariation
- 16: Staupunkt
- 18: Rückströmung
- 18a, b: Teilströme
- 20: Flächenabschnitt
- 22: Anströmfläche
- 24: Hochfläche
- 26: Längsfläche
- 28: Erhebung / Wellenberg
- 30: Vertiefung / Wellental
- 32: Druckgradient
- 34: Erweiterung
- 36: Radialspalt
- 38: Seitenwandungsabschnitt
- 40: Zurückstufung
- 42: Gegenkontur
- 44: Konturvariation
- 46: Nut
- 46a: vordere Nut

- x: Längsrichtung Strömung / Triebwerk
- y: Umfangsrichtung / Rotationsrichtung
- z: Hochrichtung / Radialrichtung

## Patentansprüche

1. Laufschaufel für einen Verdichter einer Turbomaschine, mit einem Schaufelblatt (2), das eine Vorderkante (4), eine Hinterkante (6) und eine Blattspitze (12) aufweist, zwischen denen sich eine Druckseite (8) und eine Saugseite (10) erstreckt, **gekennzeichnet durch** eine sich in die Hinterkante (6) und die Blattspitze (12) erstreckende einseitige druckseitige Profilvariation (14), wobei die Profilvariation (14) eine zur Blattspitze (12) und zur Hinterkante (6) geöffnete Ausnehmung ist, die im Bereich eines maximalen Druckgradienten (32) beginnt und eine gegenüber einem benachbarten Flächenabschnitt (20) zurückgestufte ebene Anströmfläche (22) aufweist oder ein Wellenprofil ist, dessen Wellentäler (30) quasi radial zur Rotationsachse orientiert sind.

2. Laufschaufel nach Anspruch 1, wobei sich Wellenberge (28) des Wellenprofil über ein Druckseitenprofil hinaus erstrecken und so eine lokale Verdickung des Schaufelblattes (2) bewirken.

3. Verdichter mit zumindest einer Schaufelreihe (1) mit einer Vielzahl von Laufschaufeln nach einem der vorhergehenden Ansprüche.

4. Turbomaschine mit einem Verdichter nach einem der vorhergehenden Ansprüche.

## Claims

1. A rotor blade for a compressor of a turbo engine, having a blade (2) with a front edge (4), a rear edge (6) and a blade tip (12), a pressure side (8) and a suction side (10) extending therebetween, **characterized by** a unilateral pressure-sided profile variation (14) extending into the rear edge (6) and the blade tip (12), wherein the profile variation (14) is a recess opening to the blade tip (12) and the rear edge (6) which begins in the region of a maximum pressure gradient (32) and has a flat inflow surface (22) which is stepped back compared to an adjacent surface section (20) or is a wave profile whose wave troughs (30) are basically oriented in the radial direction to the rotation axis.

2. The rotor blade according to claim 1, wherein the wave crests (28) of the wave profile extend beyond a pressure side profile and thus cause a local thickening of the blade (2).

3. A compressor with at least one blade row (1) having a plurality of rotor blades according to one of the preceding claims.

4. A turbo engine with a compressor according to one of the preceding claims.

## Revendications

1. Aube mobile pour un compresseur d'une turbomachine, comprenant une pale (2) présentant un bord d'attaque (4), un bord de fuite (6) et un bout de pale (12) entre lesquels s'étendent un intrados (8) et un extrados (10), **caractérisée par** une variation de profil (14) côté intrados, unilatérale, s'étendant dans le bord de fuite (6) et le bout de pale (12), dans laquelle la variation de profil (14) est un évidement ouvert vers le bout de pale (12) et le bord de fuite (6) et commence au niveau d'un gradient de pression maximal (32) et présente une surface soufflée (22) plane, en retrait par rapport à une portion de surface (20) adjacente, ou est un profil ondulé dont les creux d'ondulation (30) sont orientés quasi radialement par rapport à l'axe de rotation.

2. Aube mobile selon la revendication 1, dans laquelle des sommets d'ondulation (28) du profil ondulé s'étendent au-delà d'un profil côté intrados et provoquent ainsi un épaississement local de la pale (2).

3. Compresseur avec au moins une rangée de pales (1) avec une pluralité d'aubes mobiles selon l'une quelconque des revendications précédentes.

4. Turbomachine avec un compresseur selon l'une quelconque des revendications précédentes.
